# EUROPEAN PATENT APPLICATION

(11) **EP 2 942 741 A1**
(43) Date of publication of application: **11.11.2015**
(21) Application number: 15166460.4
(22) Date of filing: 05.05.2015
(51) Int. Cl.: G06K 19/077

(54) **SMART CARD MODULE**

(30) Priority: 06.05.2014 GB 201407977
(71) Applicant: Johnson Electric S.A., 3280 Murten (CH)
(72) Inventor: Linfield, Calvin John, Shatin, N.T. (HK)
(74) Representative: Hocking, Adrian Niall

(57) **Abstract**

A smart card module (10) comprises an extended circuit substrate (12); a card-reader contact element (18) on one side of the extended circuit substrate (12) for connection to a smart card reader; an integrated circuit connection element (20) on another side of the extended circuit substrate (12) in electrical communication with the card-reader contact element (18) and to which an integrated circuit (22) is mountable; and an antenna (24) on the extended circuit substrate (12) and which is connected to the integrated circuit connection element (20) for receiving radio frequency signals from the smart card reader to energise the integrated circuit (22). A furthest perimeter edge of the said antenna (24) is spaced from a relative proximal edge of the card-reader contact element (18) by at least half a distance between the said proximal edge and a centre C1 of the card-reader contact element. This enables a larger antenna coil to be accommodated on the substrate with less overlap of the card-reader contact element, whilst also enabling a separate module to be formed for integration with a body of the smart card.

## Description

### FIELD OF THE INVENTION

The present invention relates to a smart card module, a smart card having such a smart card module, such as a bank card or SIM card, a method of forming such a smart card module, and to a method of forming a smart card having such a smart card module.

### BACKGROUND OF THE INVENTION

Smart card modules are well known and are used in smart cards, also known as chip cards or integrated circuit cards. Such smart cards are typically dual interface smart cards, whereby they can communicate with a card reader with and without direct contact.

A smart card module usually comprises a contact pad on one side of a module substrate and a chip mounted on the other side of the substrate. The chip is typically positioned within the area of, and in communication with, the contact pad. An antenna, embedded in a body of the smart card and outside the smart card module, is in electrical connection with the chip.

The form and function of such smart cards is strictly defined: the dimensions and shapes of the card and contacts according to ISO 7810 and ISO 7816; and the communications protocol according to ISO 14443. The latter of these equates to radio frequency identification (RFID) of 13.56MHz, and the inductance in the antenna is of the order of a few microHenries.

The antenna may be physically connected to the chip. Lamination of such a smart card is required in order to trap the antenna between the card layers. Such arrangement has several disadvantages. It is complex to establish electrical connection between the antenna and the chip, and it is known for such connection to fail when manufacturing smart cards. This increases manufacturing time and costs. Providing the antenna in the smart card also produces non-planarity across the surface of the smart card, such that the card may not be perfectly even. This is not aesthetically pleasing.

To overcome the difficulties with establishing electrical connection between the antenna and the chip, it is known to provide a small first antenna on the smart card module and a larger secondary antenna in the smart card. The two antennae are typically coupled inductively, for example by electromagnetic induction.

However, providing a secondary antenna on the smart card does not solve the non-planar aesthetic issue. Furthermore, the process of providing a secondary antenna on the smart card is expensive and requires certain material to be used so that the antenna can be embossed to the smart card. The manufacturing process is more complicated than the single antenna production process, thus adding to time and costs. Furthermore, connection between the two antennae cannot be tested until the smart card module has been assembled with the body of the smart card. Thus defective cards cause greater waste.

There have been attempts to provide a single antenna solution, for example, by providing a single antenna on the smart card module around the chip for inductive coupling with the smart card reader antenna. However, the proximity between the smart card module antenna and the metallic contact pad means that the contact pad interferes with the electromagnetic connection between the smart card module antenna and the card reader antenna. Furthermore, as the size of the antenna is limited by the size of the module, the performance of such antenna is not satisfactory.

Another shortcoming of the current smart card module design is that when the smart card is inserted into the card reader, the spring load creates a force on the contact pad of the smart card. This may deform the contact pad and break the connection between the contact pad and the chip, rendering the smart card defective.

The present invention therefore seeks to provide a solution to one or more of the abovementioned problems.

### SUMMARY OF THE INVENTION

According to a first aspect of the invention, there is provided a smart card module comprising an extended circuit substrate; a card-reader contact element on one side of the extended circuit substrate for connection to a smart card reader; an integrated circuit connection element on another side of the extended circuit substrate in electrical communication with the card-reader contact element and to which an integrated circuit is mountable; and an antenna on the extended circuit substrate and which is connected to the integrated circuit connection element for receiving radio frequency signals from the smart card reader to energise the integrated circuit, a furthest perimeter edge of the said antenna being spaced from a relative proximal edge of the card-reader contact element by at least half a distance between the said proximal edge and a centre of the card-reader contact element.

The extended smart card module is advantageous as the antenna is provided on the smart card module rather than in the smart card, which reduce the complexity in manufacturing and also overcomes the problem of non-planarity the antenna produces across the surface of the body or support of the smart card. Furthermore, the contactless function of the smart card module can be tested and any faults dealt with prior to assembling the smart card.

Where the antenna extends substantially across the whole length of the circuit substrate, with the centre of the antenna being offset from the centre of the card-reader contact element, the size of the antenna in relation to the card-reader contact element is greater when compared to conventional smart card module arrangement. This increase in size of the antenna overcomes or reduces interference by the card-reader contact element. It also increases the power of the connection between the smart card module antenna and the smart card antenna.

Where the antenna extends part way along a length of the circuit substrate and is spaced from the card-reader contact element, the distance between the antenna and the card-reader contact element substantially reduces or prevents interference by the card-reader contact element. As there is no overlap between the antenna and the card-reader contact element, the area covered by the antenna can also increase compared to a conventional smart card module arrangement. A more powerful connection between the card reader antenna and the smart card module antenna can therefore be made, thus improving the functionality of the smart card module.

Smart cards using such a smart card module do not require a bigger secondary antenna, thus reducing complexity, time and cost in the manufacture of the smart card.

Preferably, the integrated circuit is spaced from a smart card reader connection area defined by the card-reader contact element, such that in the event the card-reader contact element is deformed by impact when the smart card is inserted into the card reader, the connection between the card-reader contact element and the integrated circuit is not affected.

Advantageously, the length of the circuit substrate is or is substantially twice a length of the card-reader contact element, the card-reader contact element typically being similar in length to a conventional circuit substrate. The area covered by the antenna on the circuit substrate can therefore be twice or substantially twice that of a conventional smart card module arrangement.

Preferably the antenna is a coil, with at least one turn, such that the coil can circumnavigate an area on the circuit substrate.

Furthermore, the antenna may extend from one said side of the circuit substrate to the other said side of the circuit substrate through a via hole in the circuit substrate. This increases the length of the antenna, which in turn improves the strength of the electromagnetic connection between the antenna of the smart card module and the antenna on the smart card reader. Even more preferably, the portion of the antenna on the first said side is identically sized and shaped to the portion of the antenna on the second said side, such that the two portions are substantially superposed on the circuit substrate.

The circuit substrate may be folded such that the antenna overlaps onto itself, increasing the thickness of the antenna. This further improves a strength of the electromagnetic connection between the antenna of the smart card module and the antenna on the smart card reader.

According to a second aspect of the invention, there is provided a smart card comprising a card body and a smart card module as claimed in any preceding claim mounted in the body.

Preferably, only or substantially only the card-reader contact element is exposed exteriorly of the card body.

According to a third aspect of the invention, there is provided a method of forming a smart card module in accordance with the first aspect of the invention, comprising the steps of: a] providing an antenna on an extended circuit substrate; b] providing a card-reader contact element on one side of the extended circuit substrate; and c] assembling and mounting an integrated circuit on an opposing side of the extended circuit substrate.

According to a fourth aspect of the invention, there is provided a method of forming a smart card using a smart card module formed by a method according to the third aspect of the invention, comprising the steps of: a] mounting the smart card module on a base layer of a card body of a smart card; and b] mounting a top card layer of the card body to the bottom card layer, such that the smart card module is at least partially encased by the top and bottom card layers.

Preferably, subsequent to assembly, only the card-reader contact element of the smart card module is exposed.

According to a fifth aspect of the invention, there is provided a smart card module comprising an elongate circuit substrate having a major longitudinal extent and a minor lateral extent; a card-reader contact element on one side of the elongate circuit substrate for connection to a smart card reader; an integrated circuit connection element on another side of the circuit substrate in electrical communication with the card-reader contact element and to which an integrated circuit is mountable; and an antenna on the extended circuit substrate and which is connected to the integrated circuit connection element for receiving radio frequency signals from the smart card reader to energise the integrated circuit, at least part of the antenna extending across at least substantially the entire minor lateral extent of the elongate circuit substrate at or adjacent to a perimeter edge thereof, a perimeter edge of the said antenna part being spaced from a relative proximal edge of the card-reader contact element by at least half a distance between the proximal edge and a centre of the card-reader contact element.

### BRIEF DESCRIPTION OF THE DRAWINGS

A preferred embodiment of the invention will now be described, by way of example only, with reference to figures of the accompanying drawings. In the figures, identical structures, elements or parts that appear in more than one figure are generally labelled with a same reference numeral in all the figures in which they appear. Dimensions of components and features shown in the figures are generally chosen for convenience and clarity of presentation and are not necessarily shown to scale. The figures are listed below.
Fig. 1 shows a plan view of a first embodiment of a smart card module according to the present invention, showing a first side of an elongate circuit substrate;
Fig. 2 is a plan view of the module of Fig. 1, showing a second side of the circuit substrate;
Fig. 3 shows a superpositional view of the views shown in Figs. 1 and 2, showing how the components overlie one another on their respective sides;
Fig. 4 is a diagrammatic cross-sectional view of the first embodiment of the module in combination with a smart card support or body, according to the second aspect of the present invention;
Fig. 5 shows a superpositional plan view of a second embodiment of a smart card module according to the present invention, showing how the components on the first side and the second side of the elongate circuit substrate overlie one another;
Fig. 6 is a diagrammatic cross-sectional view of the second embodiment of the module in combination with a smart card support or body, according to the present invention;
Fig. 7 shows a plan view of a third embodiment of a smart card module according to the present invention, showing the first side of the elongate circuit substrate;
Fig. 8 shows a plan view of the module of Fig. 7, showing the second side of the circuit substrate;
Fig. 9 is a superpositional view of the views shown in Figs. 7 and 8, showing how the components overlie one another on their respective sides;
Fig. 10 shows a diagrammatic cross-sectional view of the third embodiment of the module;
Fig. 11 shows a superpositional plan view of a fourth embodiment of a smart card module according to the present invention, showing how the components on the first side and the second side of the elongate circuit substrate are offset from one another so as to be non-concentric;
Fig. 12 shows a superpositional plan view of a fifth embodiment of a smart card module according to the present invention, showing how the components on the first side and the second side of the elongate circuit substrate at least in part overlie one another;
Fig. 13 shows a plan view of a sixth embodiment of a smart card module according to the present invention, showing the module having a substrate capacitor;
Fig. 14 shows a superpositional plan view of a seventh embodiment of a smart card module according to the present invention, showing a card-reader contact element having contact pads of minimum ISO dimensions; and
Fig. 15 is a diagrammatic cross-sectional view using an eighth embodiment of the smart card module in combination with a smart card support or body, in accordance with the second aspect of the invention.

### DETAILED DESCRIPTION OF THE PREFERRED EMBODIMENTS

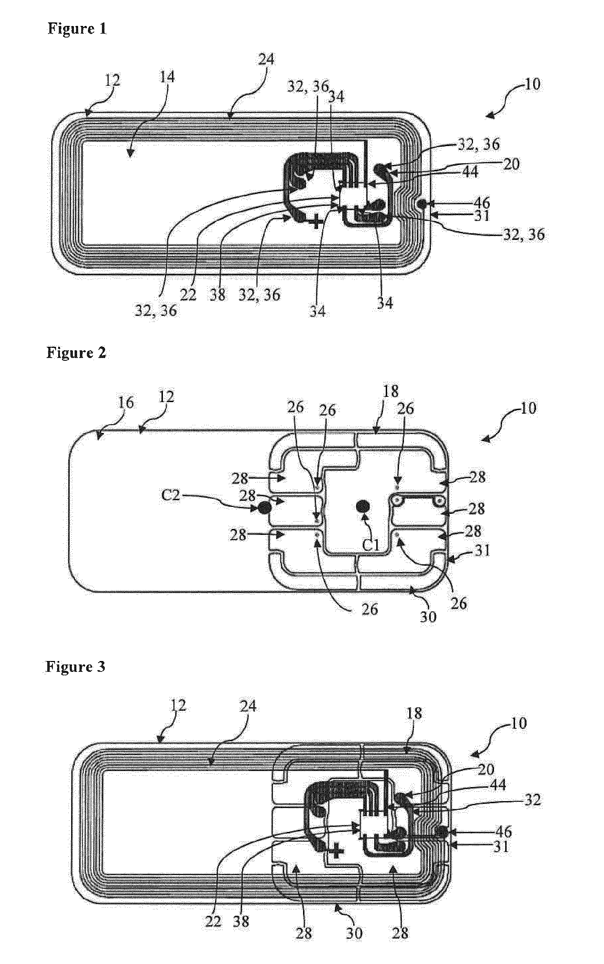

Referring firstly to Figures 1 to 4, there is shown a first embodiment of an embedded smart card module 10 forming part of a dual-interface smart card, such as a bank card, identification card, health card, SIM card or any other similar dual-interface device. The smart card module 10 comprises an extended or elongate circuit substrate 12 having a first side or surface 14 and an opposing second side or surface 16, which are preferably planar. A card-reader contact element 18 is mounted to the second side 16 of the circuit substrate 12.

An integrated circuit contact element 20 is in electrical communication with the card-reader contact element 18, through the circuit substrate 12. The integrated circuit contact element 20 defines a connection area at one end for mounting to the first side 14 of the elongate circuit substrate 12 an integrated circuit, in the form of a chip 22. At the other end, the integrated circuit contact element 20 passes through via holes 26 to connect with the card-reader contact element 18.

An antenna, in this case in the form of an antenna coil 24, is affixed to the first side 14 of the circuit substrate 12 for capturing radio frequency signals from a smart card reader. The antenna coil 24 is in electrical connection with the chip 22, which is thus energised thereby.

The dimension and shape of smart cards, where the smart card module 10 is to be embedded, are defined according to several international standards, such as ISO 7810 and ISO 7816. For example, ISO 7810 states that a banking card should have dimensions of 85.60 mm x 53.98 mm x 0.76 mm. In this embodiment, the smart card module is designed for a standard banking card, and the elongate circuit substrate 12 is therefore sized to be substantially smaller than the dimensions of the card to be utilised.

The circuit substrate 12 is substantially rectangular having a major longitudinal extent and a minor lateral extent. It is substantially longer or extended in length than a circuit substrate used for a conventional smart card module, whereby the size of the circuit substrate is roughly similar to the size of the card-reader contact element 18. In this particular embodiment, a length of the circuit substrate 12 is approximately twice as long as a length of the card-reader contact element 18, and the width of the circuit substrate 12 and the card-reader contact element 18 are substantially similar. However, these dimensions are only examples and as such are non-limiting.

The substrate 12 is typically formed from a plastics material, such as polyester, polyimide or epoxy glass, which is preferably a flexible web or which may be thicker and therefore rigid or semi-rigid. However, the substrate 12 can be formed from any appropriate material and may be transparent, translucent or opaque.

As seen in Figure 2, approximately half of the second side 16 of the circuit substrate 12 is occupied by the card-reader contact element 18, such that the other half of the second side 16 is exposed. The card-reader contact element 18 typically has a surface finish formed by an electrodeposited noble metal layer, typically gold, although any suitable, preferably non-corrosive, electrically conductive material may be utilised. The card-reader contact element 18 includes a plurality of individual contact pads 28 arranged on the second side 16 of the circuit substrate 12, together forming a smart card reader connection area 30 designed to make electrical connection with respective contacts within the card reader. The card reader connection area 30 is typically chamfered at its corners and generally rectangular in shape. A centre C1 of the card-reader contact element 18 is thus offset or non-concentric with a centre C2 of the circuit substrate 12, preferably lying at or adjacent to a lateral perimeter edge 31 of the circuit substrate 12.

A plurality of the via holes 26 is provided on the circuit substrate 12, and these are apertures which extend through the circuit substrate 12 from the first side 14 to the second side 16 to allow the integrated circuit contact element 20 to extend there through.

The dimensions and positioning of the contact pads 28 are specified by ISO 7816, and the smart card reader connection area 30 should comprise at least six contact pads 28. Additional contact pads 28 are in this case provided for additional functionalities, but may not be essential. In this embodiment, the smart card reader connection area 30 houses six contact pads 28, but it will be appreciated that the area 30 may house up to eight contact pads 28, or more or less as required. Currently, only five out of the six contact pads 28 are in use due to present convention and regulations.

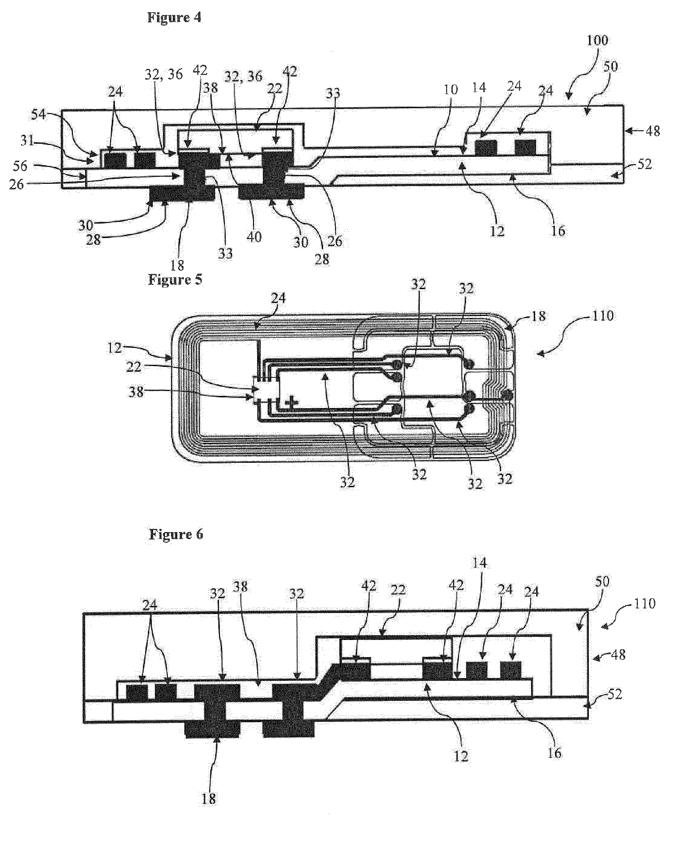

The integrated circuit contact element 20 includes a plurality of integrated circuit contact members 32, each being connected to a connector 33, shown in cross-section in Figure 4, which in turn connects to a respective contact pad 28. The integrated circuit contact members 32 and connectors 33 are made of electrically conductive material, typically copper or any other suitable electrically conductive material to enable electrical communication between the chip 22 and the card-reader contact element 18.

Each integrated circuit contact member 32 has a first end 34 that makes electrical contact with the chip 22, and a second end 36 that extends from and connects to a respective contact pad 28, through a respective via hole 26 on the circuit substrate 12 via the connector 33. In this embodiment, there are five integrated circuit contact members 32 and five corresponding via holes 26, corresponding to each of the five in use contact pads 28.

The first ends 34 of the integrated circuit contact members 32 define a chip receiving area 38 thus forming terminals on the first side 14 of the circuit substrate 12 to which the chip 22 is electrically connected.

As seen in Figure 3, the chip receiving area 38, and therefore the chip 22, is arranged to be positioned directly above the card-reader contact element 18, but on the first side 14 of the circuit substrate 12. In other words, the chip receiving area 38 overlies the card-reader contact element 18, spaced apart by the interposed circuit substrate 12, and is positioned within or substantially within the smart card reader connection area 30.

The chip 22 is typically assembled as a flip chip, or assembled by a suitable assembly technology such as wire bonding or surface-mount technology. A circuit substrate facing side 40 of the chip 22 is provided with a plurality of contact elements 42, typically being a pin, arm, pad or terminal, for making electrical contact with respective integrated circuit contact members 32. The contact elements 42 are sized and positioned on the chip 22 such that, when the chip 22 is received by the chip receiving area 38, the contact elements 42 can make contact with their respective integrated circuit contact member 32. Thus the chip 22 can be powered by a contact connection made between the card reader and the card-reader contact element 18.

The antenna coil 24 is a coiled deposition of electrically conductive material, having first and second terminals 44, 46. It may preferably be made of low resistance material, such as graphene, but also standard conductive materials, such as copper. Each terminal 44, 46 terminates at or adjacent to the chip receiving area 38, at locations which are connectable with the chip 22, such that when connected, the antenna coil 24 can provide power to the chip 22.

In this embodiment, the antenna coil 24 makes contact with the chip 22 via an antenna contact area (not shown) on the chip 22. The antenna coil 24 has a plurality of turns which circumnavigate the module 10, extending at or adjacent to a perimeter edge of the first side 14 of the circuit substrate 12.

As a centre C1 of the card-reader contact element 18 is offset from a centre C2 of the first side 14, the centre of the antenna coil 24, coinciding with the centre C2 of the first side 14, is offset from the centre C1 of the card-reader contact element 18.

To assemble the smart card module 10, the antenna coil 24 is formed on the first and/or second sides 14, 16 of the circuit substrate 12, and the card-reader contact element 18 is mounted to the second side 16 of the circuit substrate 12. The chip 22 is then assembled and mounted to the first side 14 of the circuit substrate 12.

If the antenna coil 24 is formed on the first side 14 of the circuit substrate 12, for example, according to the first embodiment, once assembled, the chip 22 would be located over or partially over the antenna coil 24.

A typical smart card 100 comprises a main card body 48 having a base layer 50 and a top card layer 52, with the smart card module 10 being sandwiched there between. A recess 54 is provided in the base layer 50 to receive parts of the module 10 that protrude from the first side 14 of the circuit substrate 12, and a recess 56 is provided in the top layer 52 to receive and retain the circuit substrate 12. Following assembly, the contact element 18 lies flush or substantially flush with an exterior surface of the card body 48.

To assemble the smart card 100, the smart card module 10 is inserted into the recess 54 of the base layer 50 such that the mounted chip 22 and the integrated circuit contact element 20 are received by the recess 54. The top layer 52 is then placed over the base layer 50, and the two layers 50, 52 are laminated together. The majority of the smart card module 10 is thus encased within the card body 48, with only the card-reader contact element 18 being exposed.

By integrating the antenna coil 24 into the smart card module 10, the planarity of the smart card 100 is not affected, thus negating the need to provide additional laminated card layers for a smart card antenna, reducing manufacturing complexity, time and costs.

If the smart card 100 is inserted into a card reader which relies on contact connection, the card-reader contact element 18 will contact the card reader, completing a circuit, thereby powering the chip 22.

If the smart card 100 is brought into the proximity of a contactless card reader, a radio-frequency identification (RFID) signal emitted by an antenna of the contactless card reader will induce a voltage in the antenna coil 24 of the smart card module 10. The antenna coil 24 thus forms a complete circuit with the chip 22, providing the chip 22 with power to function.

The performance of the antenna on a conventional smart card module is limited by its size and the proximity to the card-reader contact element due to interference from the contact pad. By providing a longer or extended circuit substrate 12, there is a greater surface area which the antenna coil 24 can occupy. Thus the smart card module 10 can accommodate a longer antenna coil 24, thereby improving its performance and overcoming interference issues due to the proximity with the card-reader contact element 18.

In this particular embodiment, the circuit substrate is approximately twice the size of a conventional circuit substrate or a card-reader contact element, but it will be appreciated that the circuit substrate may be extended further, or extended less than the illustrated embodiment. However, this particular size of the circuit substrate provides an optimum space for an extended antenna, whilst allowing relatively straightforward manufacturing due to a traditional substrate web already accommodating two card-reader contact element areas in side-by-side relationship.

The improvement in the antenna performance can relate to a number of features, which may include, but not be limited to, improved communication range; antenna power; antenna bandwidth; quality factor; frequency response; improved minimum magnetic field strength; or reduced impact of interference.

It will be appreciated that the described embodiment of the invention is merely one possible embodiment. Second, third, fourth and fifth possible embodiments, illustrating different smart card module arrangements are shown in Figures 5 to 12. Similar or identical references refer to parts which are similar or identical to those described above, and therefore further detailed description is omitted.

The second embodiment of the smart card module 110 is shown in Figures 5 and 6. This embodiment is substantially identical to that of the first embodiment, except that the chip 22 is spaced and offset from the card-reader contact element 18. Each integrated circuit contact member 32 is therefore further elongated and extended across the first side 14 of the elongate circuit substrate 12, and away from the card-reader contact element 18 in order to reposition the chip receiving area 38 remotely of the card-reader contact element 18.

The second embodiment has the added advantage of offsetting the chip 22 from the card-reader contact element 18, so that in the event the card-reader contact element 18 is deformed by impact during insertion of the smart card 110 into the card reader, the connection between the card-reader contact element 18 and the chip 22 remains unaffected.

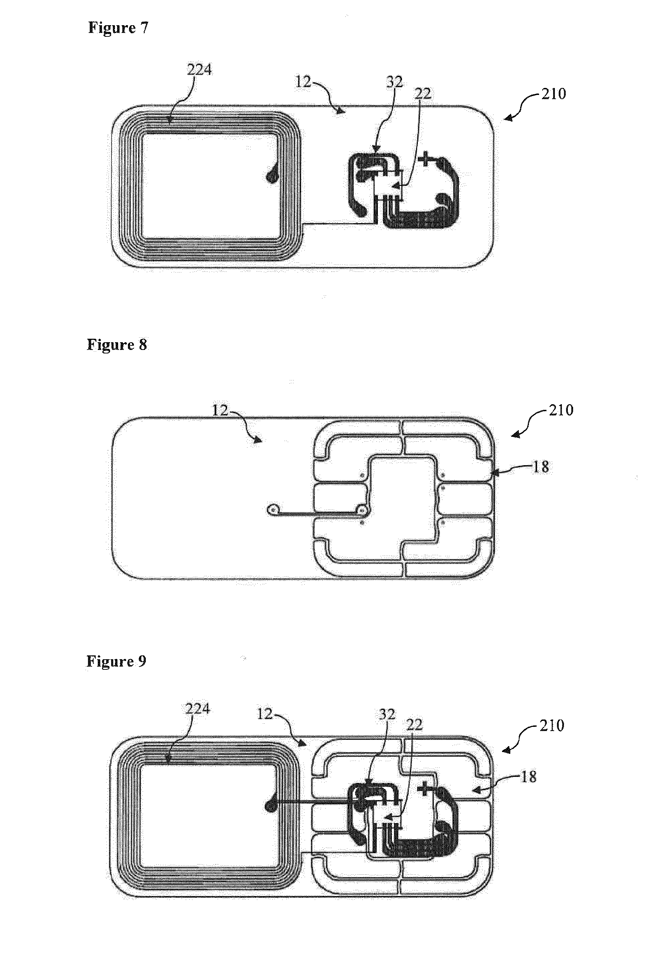

Shown in Figures 7 to 10 is the third embodiment of the smart card module 210. This embodiment is substantially identical to that of the first embodiment, except that the antenna coil 224 does not extend around the whole circumferential perimeter of the elongate circuit substrate 12. Instead, the antenna coil 224 is provided entirely offset from the card-reader contact element 18.

Each turn of the antenna coil 224 in this embodiment is therefore not as long as each turn of the antenna coil 24 of the first or second embodiments. However, as the whole of the antenna coil 224 is offset from the card-reader contact element 18, interference from the card-reader contact element 18 is significantly reduced, thus still providing an improved performance compared to conventional smart card module arrangements. Furthermore, the circuit substrate 12 may accommodate more antenna turns than illustrated in this embodiment, thus increasing the length of the antenna coil 224 even further.

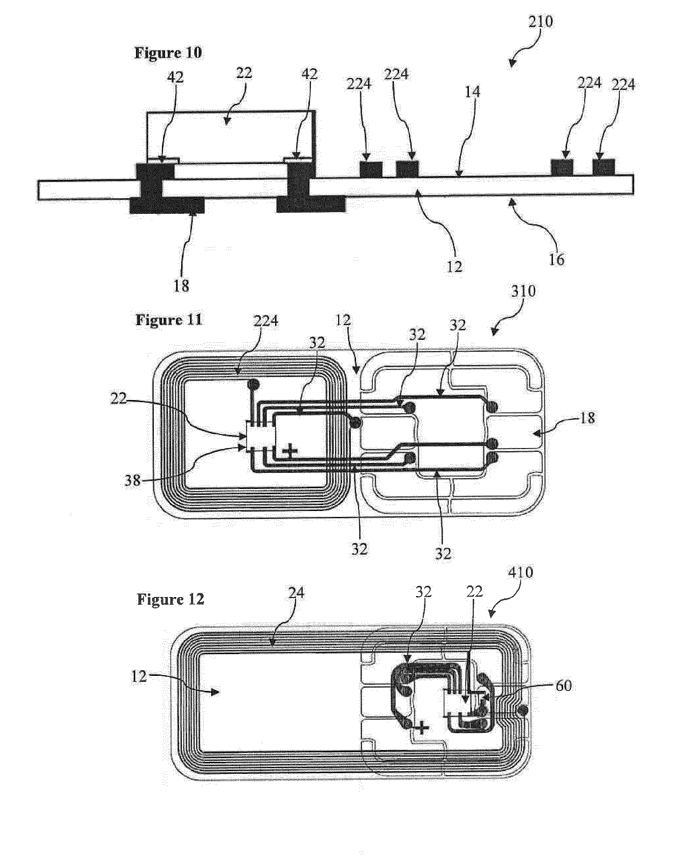

The fourth embodiment of the smart card module 310 is shown in Figure 11. In this embodiment, in addition to having chip 22 positioned offset from the card-reader contact element 18, similarly to the second embodiment, the antenna coil 224 is also offset from the card-reader contact element 18 similarly to the third embodiment. Consequently, the elongate circuit contact members 32 extend beyond the perimeter of the card-reader contact element 18 to the chip receiving area 38, and thus the chip 22, in this case surrounded by the antenna 224 lying adjacent to the card-reader contact element 18.

The fifth embodiment of the smart card module 410 is shown in Figure 12. This embodiment is substantially identical to that of the first embodiment, but further comprises a capacitor 60, provided as a separate component and preferably positioned in parallel with the antenna coil 24, in order to boost the performance of the antenna coil 24. It will be appreciated that the capacitor 60 may also be provided in the second, third and fourth embodiments.

The capacitor 60 is used to boost the performance of the antenna coil 24. In practice, the capacitor 60 allows an antenna to have fewer turns without compromising performance in relation to an antenna with more turns and without a capacitor. An antenna coil 24 having fewer turns reduces the resistance of the antenna, thus resulting in improved performance.

In this embodiment, the capacitor 60 is provided so as to be connected to a circuit contact member 32, on the circuit substrate 12 and affixed in the vicinity of the card-reader contact element 18.

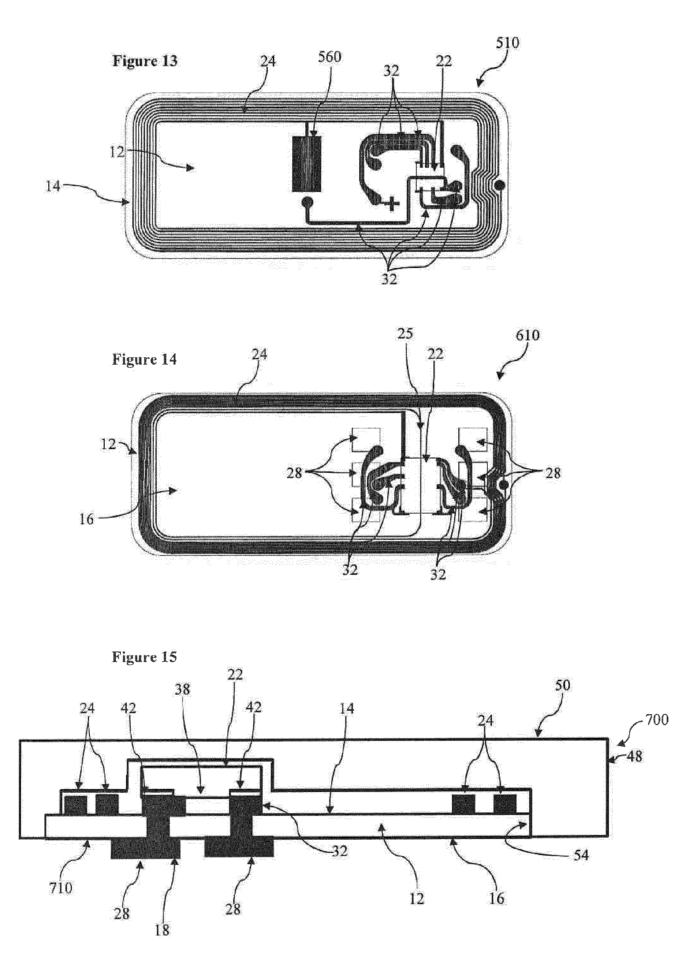

Alternatively, a capacitor 560 may be provided integrally with the circuit substrate 12, as shown in a sixth embodiment of the smart card module 510 in Figure 13. Such a substrate capacitor 560 may function identically to the separate component capacitor 60, shown in Figure 12, and advantageously boosts the performance of the antenna coil 24.

In this embodiment, the substrate capacitor 560 is provided offset from the card-reader contact element 18 and integrated circuit 22, and is connected in parallel to the antenna 24 and chip 22 via a circuit contact member 32.

It will be appreciated that the capacitor 60, 560 may be positioned in a variety of positions about the substrate 12, the embodiments shown in Figures 12 and 13 being just two examples thereof. The capacitor 60, 560 may be positioned on either side 14, 16 of the substrate 12, adjacent to the card-reader contact element 18, or offset from the card-reader contact element 18.

Alternatively or additionally, one or more said capacitors may be provided and/or the or each capacitor may either be in series or in parallel with the antenna coil 24.

Whilst the contact pads of the card-reader contact element have positions defined by ISO 7816, it will be appreciated that the shape and size of the contact pads themselves is not so rigorously defined. Provided that the contact pads are larger than the ISO minimum dimensions, the card-reader contact element can be shaped in a broad variety of ways.

A seventh embodiment of a smart card module 610 comprising a card-reader contact element 18 which has contact pads 28 having the minimum ISO dimensions is shown in Figure 14. This reduces undesirable antenna interference. Furthermore, in this embodiment, there is a greater surface area on the second side 16 of the circuit substrate 12 onto which other components can be positioned. In this instance, the extra surface area between the contact pads 28 has been utilised for positioning the chip 22, whilst the antenna 24 circumnavigates the circuit substrate 12.

The additional surface area yielded by the minimization of the area covered by the contact pads 28 allows for an extension of the antenna coil 24 into this area. A portion 25 of the antenna coil 24 may, for instance, loop underneath an area below the integrated circuit connection element 20 on the substrate 12, further extending a length and therefore performance of the antenna coil 24.

A minimized card-reader contact element 18 and extended antenna 24, 25 could easily be incorporated into any one or each of the preceding embodiments of the invention, in order to further improve the performance of the antenna.

The embodiments of the smart card described thus far relate to a smart card having a top layer which is laminated onto the base layer to retain the smart card module. However, as shown in Figure 15, the top layer could be dispensed with. In this example, the smart card module 710 is inserted into recess 54 of smart card 700, with the contact pads 28 of the card-reader contact element 18 being exposed. In said arrangement, the smart card module 710 would preferably be bonded into the recess 54 for retention.

The recess 54 has several different sections for respectively receiving the circuit substrate 12, the integrated circuit connection element 20 and antenna 24, and the chip 22. The form of the recess 54 will be dependent upon the shape of the smart card module 710 itself; compare this embodiment with those shown in Figures 4 and 6.

In such an arrangement, there is no laminate layer which can interfere with the physical connection between the card-reader contact element 18 and a card reader, or to impede the contactless connection between said card reader and the antenna 24.

It will be appreciated therefore that the recess 54 of the base layer 50 of the smart card will be complementarily shaped or substantially complementarily shaped so as to receive the smart card module for which it is designed. An appropriately shaped smart card can be formed to accommodate any of the smart card modules described herein before, or any suggested hereafter.

The circuit substrate may be of shapes other than rectangular. Although the embodiments illustrate a circuit substrate having approximately twice the size of the card-reader contact element, the size of the circuit substrate may be bigger or smaller. However, the circuit substrate should ideally be at least around 1.5 times the size of the card-reader contact element so that the performance of the antenna coil can be maintained.

The precise number of turns of the antenna coil can vary according, and may comprise one or more turns. Furthermore, although the antenna coil shown in the embodiments has a general rectangular shape, the antenna coil may form other shapes, such as a circular shape. In any event, as long as the antenna has the spacing between at least a portion of its coil and the card-reader contact element, thereby enabling a greater length of coil along with reduced electrical interference, the invention improves on the prior art. It is therefore considered, whether or not the circuit substrate is elongate having a major longitudinal extent and a minor lateral extent and whether or not the centres of the antenna coil and the card-reader contact element are concentric or offset, that providing the furthest perimeter edge of the antenna is spaced from a relative proximal edge of the card-reader contact element by at least half, and preferably the whole of, the distance between the proximal edge and a centre of the card-reader contact element, then an improvement is realised.

Furthermore, it will be appreciated that, although the antenna coils in the illustrated embodiments are provided on the same side of the circuit substrate, i.e. the first side, as the chip, the antenna coil may be provided on the second side without necessarily affecting performance. As yet another alternative, the antenna coil may extend from the first side through to the second side, for example, through a via hole provided through the circuit substrate. In this latter case, it may be preferred that the two portions of the antenna coil on the opposing sides are superposed to overlie each other entirely or at least partially with the circuit substrate interposed there between. This advantageously increases a thickness and thus performance of the antenna.

An additional or alternative method of increasing the number of turns of the antenna, which will again further improve performance, is to fold the circuit substrate such that the antenna coil at least in part overlaps itself.

Although the antenna is preferably a coil, other arrangement may be provided, such as zigzag, serpentine, or tortuous arrangements.

Although the aperture on the top card layer of the smart card is sized and shaped to only expose the card-reader contact element exteriorly, it will be appreciated that a larger aperture may be provided in order to expose a greater surface area of the second side of the circuit substrate, if preferred.

It is thus possible to provide a smart card module with an extended or enlarged circuit substrate such that an antenna can be appropriately sized and positioned on the circuit substrate to enhance its performance, thus creating an improved and stronger connection with a card reader. Furthermore, an integrated circuit may also be offset from the card-reader contact element so that the connection between the integrated circuit and the antenna and card-reader contact element remains unaffected in the event of the card-reader contact element being deformed due to impact.

In the description and claims of the present application, each of the verbs "comprise", "include", "contain" and "have", and variations thereof, are used in an inclusive sense, to specify the presence of the stated item or feature but do not preclude the presence of additional items or features.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of example only, and various other modifications will be apparent to persons skilled in the field without departing from the scope of the invention as defined by the appended claims.

## Claims

1. A smart card module comprising:
an elongate circuit substrate (12) having a major longitudinal extent and a minor lateral extent;
a card-reader contact element (18) on one side of the circuit substrate for connection to a smart card reader;
an integrated circuit connection element (20) on another side of the circuit substrate in electrical communication with the card-reader contact element and to which an integrated circuit is mountable; and
an antenna (24) on the circuit substrate and which is connected to the integrated circuit connection element (20) for receiving radio frequency signals from the smart card reader to energize the integrated circuit,
at least part of the antenna (24) extending across at least substantially the entire minor lateral extent of the circuit substrate (12) at or adjacent to a perimeter edge thereof, a perimeter edge of the antenna part being spaced from a relative proximal edge of the card-reader contact element by at least half a distance between the proximal edge and a centre (C1) of the card-reader contact element (18).

2. A smart card module according to Claim 1, wherein the integrated circuit connection element (20) is positioned within or substantially within a perimeter of the card-reader contact element (18) with the substrate (12) interposed there between.

3. A smart card module according to Claim 1 or 2, wherein the antenna (24) surrounds the integrated circuit connection element (20) and are concentric.

4. A smart card module according to Claim 1, 2 or 3, wherein the antenna (24) surrounds the card-reader contact element (18) and are non-concentric.

5. A smart card module according to Claim 1 or 2, wherein the antenna (24) and the card-reader contact element (18) are offset from each other, so as to be side-by-side on the substrate (12).

6. A smart card module according to any one of the preceding Claims, wherein the integrated circuit connection element (20) extends beyond a perimeter of the card-reader contact element (18), so as to position an integrated circuit remotely on the substrate (12).

7. A smart card module according to any one of the preceding Claims, wherein a length of the circuit substrate (12) is substantially twice a length of the card-reader contact element (18).

8. A smart card module according to any one of the preceding Claims, wherein the antenna (24) is a coil.

9. A smart card module according to any one of the preceding Claims, wherein a via hole is provided for the antenna (24) to extend from one said side to the other said side of the circuit substrate (12).

10. A smart card module according to any one of the preceding Claims, wherein the circuit substrate (12) is folded such that the antenna (24) overlaps itself, so as to increase a thickness of the antenna.

11. A smart card module according to Claim 1 or 2, wherein the antenna (24) is provided partially underneath the integrated circuit connection element (20).

12. A smart card module according to any one of the preceding Claims, wherein the antenna (24) is made of graphene.

13. A smart card module according to any one of the preceding Claims, further comprising a capacitor (60, 560) to enhance performance of the antenna.

14. A smart card module according to Claim 13, wherein the capacitor (560) is provided as an integrated substrate capacitor.

15. A smart card comprising a card body (48) and a smart card module (10, 110, 210, 310, 410, 510, 610, 710) according to any one of the preceding Claims, mounted in the body.
